## Europäisches Patentamt

## European Patent Office

## Office européen des brevets

(19)

(11) Veröffentlichungsnummer: **0 079 510**
**B1**

(12) # EUROPÄISCHE PATENTSCHRIFT

(45) Veröffentlichungstag der Patentschrift:
**17.04.85**

(51) Int. Cl.⁴: **B 29 B 7/22**

(21) Anmeldenummer: **82110049.2**

(22) Anmeldetag: **02.11.82**

(54) **Mischkopf.**

(30) Priorität: **12.11.81 DE 3144920**

(43) Veröffentlichungstag der Anmeldung:
**25.05.83 Patentblatt 83/21**

(45) Bekanntmachung des Hinweises auf die Patenterteilung:
**17.04.85 Patentblatt 85/16**

(84) Benannte Vertragsstaaten:
**AT CH FR GB IT LI NL SE**

(56) Entgegenhaltungen:
**DE - B - 2 007 935**
**DE - B - 2 065 841**
**DE - B - 2 230 530**
**DE - B - 2 612 812**
**DE - B - 2 838 798**
**DE - C - 2 327 269**

(73) Patentinhaber: **Krauss-Maffei Aktiengesellschaft,
Krauss-Maffei-Strasse 2, D-8000 München 50 (DE)**

(72) Erfinder: **Bauer, Adolf, Heideweg 24b, D-8031 Olching
(DE)**

EP 0 079 510 B1

## Beschreibung

Die Erfindung betrifft einen Mischkopf, dem die Kunststoffkomponenten unter hohem Druck zugeführt werden, nach dem Oberbegriff des Anspruchs 1 (DE-PS 2 007 935). Im Zuge der weiteren Entwicklung eines solchen Mischkopfes wurden zur Regelung des Staudrucks ein in die Mischkammer einschiebbarer Staukörper (DE-PS 2 065 841, DE-AS 2 612 812) und zur Beruhigung des aus dem Mischkopf austretenden Komponentengemisches eine der Mischkammer in einem rechten Winkel nachgeschaltete Beruhigungskammer (DE-PS 2 327 269, DE-OS 2 907 938) vorgesehen.

Der Aufwand für die Weiterentwicklungen ist nicht unbeträchtlich, wobei noch nicht einmal die wichtige Aufgabe gelöst ist, neben mischungswilligen auch mischungsunwillige Komponenten verwenden zu können, die im Preis niedriger liegen als die bisher im allgemeinen verwendeten Komponenten.

Daraus ergibt sich die der Erfindung zugrunde liegende Aufgabe, einen Mischkopf für den jeweils verwendeten Komponenten angepaßte, also leicht veränderbare Mischungsbedingungen zu schaffen.

Gelöst wird diese Aufgabe durch die Maßnahme nach dem Kennzeichen des Anspruchs 1. Danach sind eine oder mehrere in die Mischkammer — veränderlich weit — einschiebbare Eintrittsdüsen, nach Anspruch 2 Düsenschieber vorgesehen, durch deren gewählte Lage die Entfernung der Eintrittsdüsen voneinander den verwendeten Komponenten optimal angepaßt werden kann. Wenn nach Anspruch 3 zwei einander gegenüberliegende Düsenschieber gleich weit in die Mischkammer eingeschoben werden, bilden sie eine Mischkammer mit gegenüber der normalen Mischkammer verkleinertem Volumen. Dabei kann das Steuerorgan in der Mischphase eine solche Stellung einnehmen, daß es an den Düsenschiebern anliegt. Allgemein betrachtet, kann die Mischstellung des Steuerorgans dazu benutzt werden, die Vermischung weiterhin zu verbessern (Anspruch 9). Eine Mischkammer mit vergrößertem Volumen ergibt sich dadurch, daß der Düsenschieber radial nach außen über die Wandung der normalen Mischkammer hinaus verschoben wird.

Eine wesentliche Weiterentwicklung des Gegenstands nach Anspruch 1 offenbart Anspruch 4. Danach ist als Weiterbildung des bekannten Staukörpers ein weiterer Schieber, der Abschlußschieber, vorgesehen, der in Richtung der Austrittsöffnung der Mischkammer den Eintrittsdüsen bzw. dem bzw. den Düsenschiebern unmittelbar benachbart ist. Mit dieser Maßnahme wird die Mischkammer in zwei Teile unterteilt, in eine Art Vormischkammer, die gemäß Anspruch 7 noch ausgeprägter vorliegt, und in eine Nachmischkammer. Die Anordnung nach Anspruch 4 läßt einen weiteren erheblichen Vorteil erreichen; der Abschlußschieber kann neben der Funktion des Stauorgans eine weitere Funktion übernehmen: er zwingt den Komponentenstrom auf dem Weg von der Vormischkammer zur Nachmischkammer zu einer Umlenkung von mindestens 90° (nach Anspruch 7 bis zu 180°) und damit zu einer Beruhigung der zunächst turbulenten Strömung. Dabei wird die Umlenkung durch die Gestaltung des Abschlußschiebers nach Anspruch 8 begünstigt. Ein derartiger Mischkopf vereinigt somit eine Mischungs-, Staudruck- und Umlenksteuerung und erfordert im einfachsten Fall doch nur einen Düsen- und einen Abschlußschieber, diesen vorzugsweise nach Anspruch 10.

Die Ansprüche 5 und 6 haben weitere vorteilhafte Einzelheiten zum Gegenstand.

Die Erfindung wird nachfolgend anhand der zwei Ausführungsbeispiele zeigenden Zeichnung erläutert. Hierbei zeigt

Fig. 1 den Längsquerschnitt nach der Linie I-I in Fig. 2 durch einen Mischkopf mit je einem Düsenschieber und Abschlußschieber in Mischstellung,

Fig. 2 einen Schnitt nach der Linie II-II in Fig. 1,

Fig. 3 einen Schnitt nach der Linie III-III in Fig. 1,

Fig. 4 den Teillängsschnitt durch einen Mischkopf mit zwei Düsenschiebern und einem Abschlußschieber in einer Mischstellung und

Fig. 5 denselben Teillängsschnitt wie nach Fig. 4, jedoch in einer anderen Mischstellung der Düsenschieber.

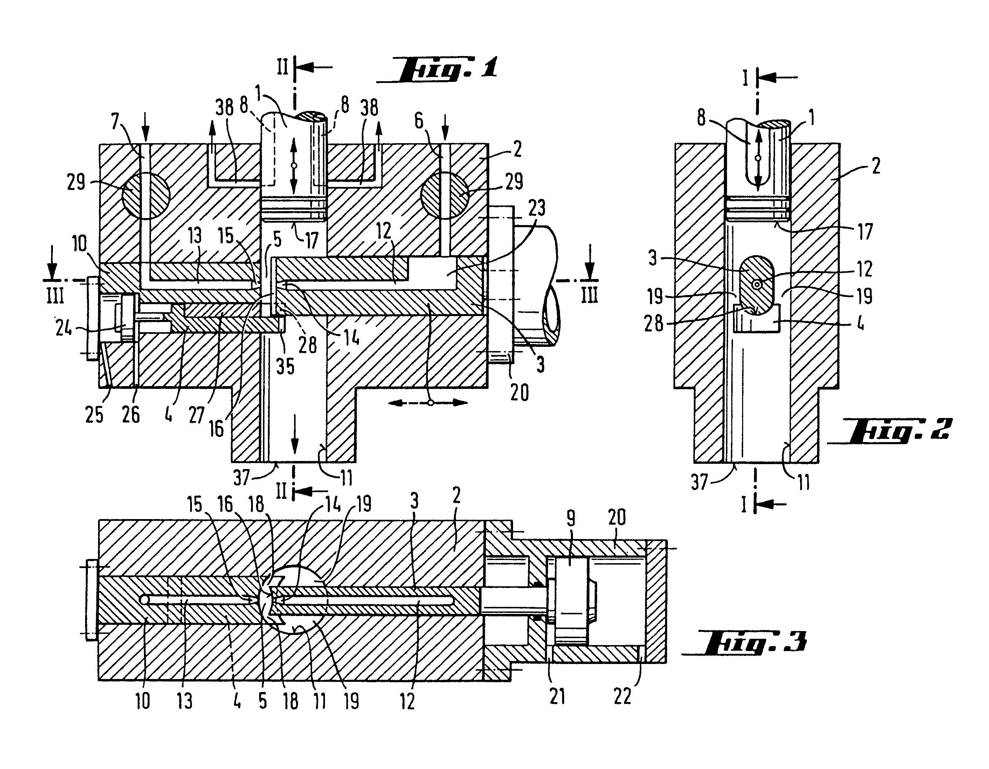

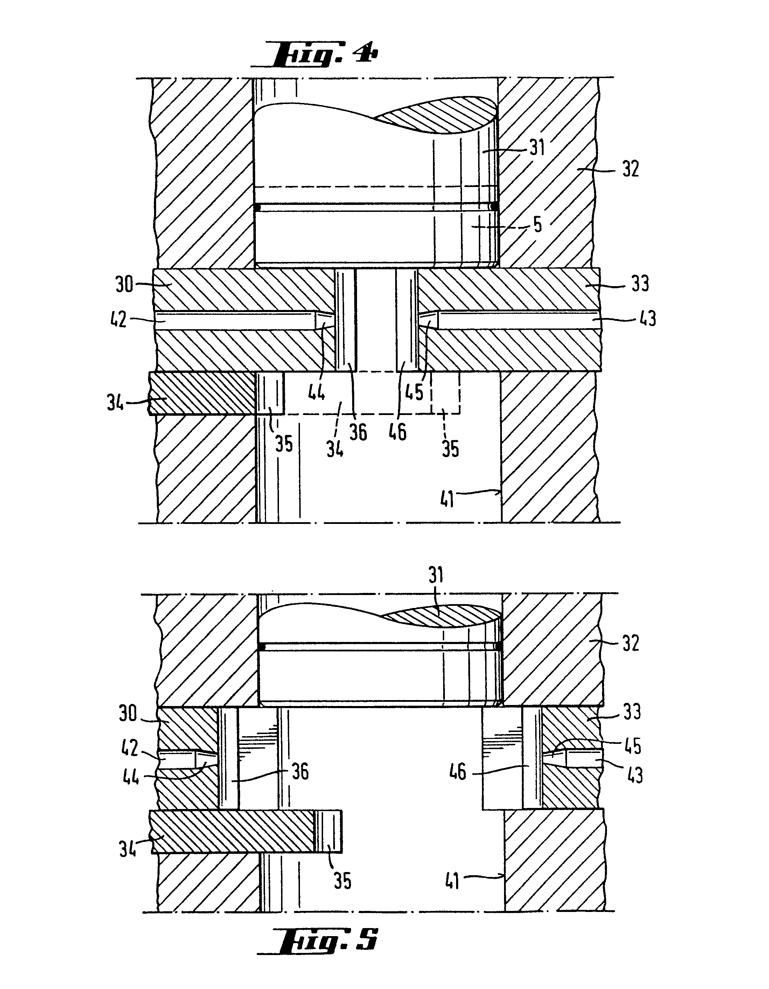

Nach den Fig. 1 bis 3 sind in einem Mischkopfgehäuse 2 eine Bohrung 11 zur Aufnahme eines Steuerkolbens 1 als Steuerorgan und zwei Ausnehmungen zur Aufnahme eines Düsenschiebers 3, eines Abschlußschiebers 4 und eines Einsatzstückes 10 vorgesehen. Die Bohrung 11 zur Aufnahme des Steuerkolbens 1, der in den Fig. 1 und 2 in seiner oberen Endlage gezeichnet ist, stellt im unteren Bereich eine Mischkammer dar, in der zwei Kunststoffkomponenten gemischt werden. Diese treten über Leitungen 6 und 7 im Mischkopfgehäuse 2, über Zuleitungen 12 und 13 im Düsenschieber 3 bzw. im Einsatzstück 10 und über Eintrittsdüsen 14 und 15 in eine im wesentlichen nach oben offene Vormischkammer 5 ein, die seitlich von der Wand der Bohrung 11 zur Aufnahme des Steuerkolbens 1 im Bereich der Eintrittsdüse 15 und von der den Durchmesser der Bohrung 11 aufweisenden Stirnseite 16 des Düsenschiebers 3 und unten von der Oberseite des Abschlußschiebers 4 begrenzt wird. Die unter hohem Druck (40 bis 200 bar) stehenden Komponenten prallen in der Vormischkammer 5 mit hoher Geschwindigkeit aufeinander und vermischen sich sofort zumindest in erheblichem Maße. Das Gemisch verläßt die Vormischkammer 5 teils seitlich durch die beiden Durchlaßkanäle 18 zwischen der Stirnseite 16 des Düsenschiebers 3 und der Wand der Bohrung 11 und teils nach oben. Der nach oben gerichtete Teil des Gemischstroms prallt gegen die Stirnfläche 17 des Steuerkolbens 1 und wird nach unten umgeleitet, und zwar durch die beiden von den Seitenflächen des Düsenschiebers 3 und des Abschlußschiebers 4 und von der Wand der Bohrung 11 gebildeten Durchlaßöffnungen 19 hindurch in den unteren Bereich der Bohrung 11, der bei den bekannten Mischköpfen der beanspruchten Gattung als Mischkammer bezeichnet worden ist, der nun aber nach der Umlenkung des Gemischstroms als Beruhigungskanal zum Abbau der turbulenten Gemischströmung dient. Dabei hat der Abschlußschieber 4 neben der Aufgabe der Bildung der Vormischkammer 5 die Aufgabe eines Drosselorgans zur Steuerung des Staudrucks, da dann, wenn er breiter ist als der Düsenschieber 3, seine Stellung den Durchtrittsquerschnitt der Durchlaßöffnungen 19 bestimmt. Das Gemisch tritt durch eine Austrittsöffnung 37 aus dem Mischkopf aus.

Die Stellung des Düsenschiebers 3 bestimmt die Größe der Vormischkammer 5, deren Größe somit in weiten Grenzen veränderbar ist. Die Bewegung des Düsenschiebers 3 wird von einem Arbeitskolben 9 gesteuert, der in einem Zylindergehäuse 20 geführt ist und über die Bohrungen 21, 22 beaufschlagt wird, und zwar nicht nur hinsichtlich seiner Stellung in der Bohrung 11 in der Mischphase, sondern auch in der Nichtmischphase, wenn der Düsenschieber 3 nach rechts so weit zurückgezogen wird, daß seine Stirnseite 16 sich der Wandung der Bohrung 11 anpaßt, um der Bewegung des Steuerkolbens 1 nach unten Platz zu machen, wodurch zunächst die Eintrittsdüse 14, 15 gegenüber der Bohrung 11 abgesperrt, der in der Bohrung 11 noch vorhandene Gemischteil ausgestoßen wird und die Wände der Bohrung 11 von Gemischresten befreit werden. Damit die über die Leitung 6 zugeführte Komponente unabhängig von der Stellung des Düsenschiebers 3 in die Zuleitung 12 gelangt, ist diese im Einmündungsbereich entsprechend verlängert (Verbreiterung 23). Der Antrieb des Steuerkolbens 1 ist nicht eigens dargestellt, vgl. hierzu die DE-PS 2 007 935. Lediglich angedeutet ist ferner die Rückführung der Komponenten in der Nichtmischphase über Überströmnuten 8 und Rückführleitungen 38, vgl. hierzu ebenfalls die vorgenannte Patentschrift.

Im Einsatzstück 10 ist als Fortsetzung der Leitung 7 die Zuleitung 13 eingearbeitet, die an ihrem Ende in die Eintrittsdüse 15 ausmündet. Unmittelbar darunter befindet sich der Abschlußschieber 4, der von einem im Mischkopfgehäuse 2 geführten Arbeitskolben 24 gesteuert wird, der über Bohrungen 25, 26 mit einem Druckmedium beaufschlagbar ist. Der Abschlußschieber 4 besitzt an seiner Oberseite eine halbkreisförmige Ausnehmung 28, in die ein am Mischkopfgehäuse 2, vorzugsweise auswechselbar, befestigtes Führungsstück 27 eingreift und die Einschiebstellung des Abschlußschiebers 4 begrenzt. Die Stirnfläche 35 des Abschlußschiebers 4 ist der Bohrungswandung 11 angepaßt.

Der Düsenschieber 3 ist an seiner Unterseite passend zu dieser Ausnehmung 28, also ebenfalls halbkreisförmig ausgebildet, ebenso an seiner Oberseite, damit das von oben nach unten strömende Gemisch strömungsgünstig geführt wird.

Schließlich ist in den Leitungen 6 und 7 je ein Drehschieber 29 angeordnet, die bei Bedarf diese Leitungen absperren. Dies kann sich für ganz kurze Zeiten als notwendig ergeben, nämlich für die Steuerzeiten des Düsenschiebers 3.

Fig. 4 und 5 zeigen ähnlich wie die Fig. 1 bis 3 ein Mischkopfgehäuse 32, einen Steuerkolben 31 in einer Bohrung 41, zwei Düsenschieber 30, 33 mit Leitungen 42, 43 und Eintrittsdüsen 44, 45 und einen Abschlußschieber 34. Statt eines einzigen Düsenschiebers sind nunmehr deren zwei vorgesehen, die beide senkrecht zur Bohrung 41 vorgeschoben, aber auch gemäß Fig. 5 so zurückgeschoben werden können, daß sich die der Bohrung 41 angepaßten Stirnseiten 36 und 46 radial außerhalb der Bohrung 41 befinden. Auf diese Weise kann der gegenseitige Abstand der beiden Eintrittsdüsen 44, 45 in weiten Grenzen variiert und damit den Erfordernissen der verwendeten Komponenten angepaßt werden, wobei die Bohrung 41 als Mischkammer dient. Dazu gehören auch die Stellung des Abschlußschiebers 34 mit seiner der Bohrung 41 angepaßten Stirnseite 35 und die Stellung des Steuerkolbens 31. Das heißt, neben den in den Fig. 4 und 5 gezeigten Stellungen ist auch die in Fig. 4 gestrichelt gezeichnete Stellung des Abschlußschiebers 34 und des Steuerkolbens 31 möglich, wobei sich oberhalb der Düsenschieber 30, 33 eine Vormischkammer 5 mit den oben beschriebenen Vorteilen ausbilden kann.

## Patentansprüche

1. Vorrichtung (Mischkopf) zum Mischen von zwei oder mehr miteinander reagierenden Kunststoffkomponenten, die über mindestens je eine Eintrittsdüse (14, 15) in eine Mischkammer (11) eintreten, dort aufeinanderprallen und als Gemisch aus einer Austrittsöffnung (37) der Mischkammer austreten, wobei die Mischkammer so gestaltet ist, daß ein als längsverschiebbarer Steuerkolben (1) ausgebildetes Steuerorgan in der einen Endlage die Verbindung zwischen den Eintrittsdüsen und der Austrittsöffnung durch die Mischkammer hindurch freiläßt und in der anderen Endlage die Eintrittsöffnungen gegenüber der Mischkammer abschließt, dadurch gekennzeichnet, daß zumindest eine (14, 44, 45) der Eintrittsdüsen (14, 15, 44, 45), in die Mischkammer (Bohrung 11, 41) hinein und aus dieser heraus, vorzugsweise senkrecht zur Mischkammerachse, verschiebbar ist.

2. Vorrichtung nach Anspruch 1, dadurch gekennzeichnet, daß die verschiebbare Eintrittsdüse (14, 44, 45) fest in einem verschiebbaren Düsenschieber (3, 30, 33) angeordnet ist.

3. Vorrichtung nach Anspruch 1 oder 2, dadurch gekennzeichnet, daß die verschiebbare Eintrittsdüse (14, 44, 45) zwecks Verkleinerung der Mischkammer (Bohrung 11, 41) bis zu einer gewünschten Stellung in die Mischkammer einschiebbar und aus dieser zurückziehbar ausgebildet ist.

4. Vorrichtung nach einem der Ansprüche 1 bis 3, mit einem in die Mischkammer zwischen den Eintrittsdüsen und der Austrittsöffnung einschiebbaren Staukörper (4), dadurch gekennzeichnet, daß der als Abschlußschieber (4, 34) ausgebildete Staukörper in eingeschobener Lage unmittelbar an der der Austrittsöffnung (37) zugewandten Seite der verschiebbaren Austrittsdüse bzw. eines der Düsenschieber (3, 30) anliegt und den Bereich der Eintrittsdüsen (14, 15, 44, 45) in Richtung der Austrittsöffnung abschließt, wobei der Düsenschieber und der Abschlußschieber in eingeschobener Lage lediglich einen Teil des Mischkammerquerschnitts einnehmen.

5. Vorrichtung nach einem der vorhergehenden Ansprüche, dadurch gekennzeichnet, daß der Düsenschieber (3, 30, 33) auch die Zuleitung (12, 42, 43) zur Eintrittsdüse (14, 44, 45) enthält.

6. Vorrichtung nach einem der Ansprüche 2 bis 5, dadurch gekennzeichnet, daß das vordere Ende des Düsenschiebers (3, 30, 33) und/oder des Abschlußschiebers (4, 34) so ausgebildet ist, daß es in der Nichtmischphase mit der Wand der Mischkammer (Bohrung 11, 41) fluchtet.

7. Vorrichtung nach Anspruch 6, mit einer zylindrischen Mischkammer, dadurch gekennzeichnet, daß die Stirnseite (16, 36, 46) des bzw. der Düsenschieber (3, 30, 33) kreisförmig ausgebildet ist und bei geringem gegenseitigen Abstand der Eintrittsdüsen (14, 15 bzw. 44, 45) eine Vormischkammer (5) bildet.

8. Vorrichtung nach einem der Ansprüche 1 bis 7, dadurch gekennzeichnet, daß die der Austrittsöffnung (37) abgewandte Seite des Abschlußschiebers (4) eine konkave oder nach innen halbzylindrische Ausnehmung (28) aufweist und daß der zum Abschlußschieber parallel verschiebbare Düsenschieber (3) so gestaltet ist, daß er einen diesbezüglich passenden, d. h. einen konvexen bzw. halbzylindrischen Vorsprung hat.

9. Vorrichtung nach einem der Ansprüche 1 bis 8, dadurch gekennzeichnet, daß die Lage des Steuerorgans (Steuerkolben 1, 31) bei freigegebenen Eintrittsdüsen (14, 15) (Mischstellung) veränderbar ist.

10. Vorrichtung nach einem der Ansprüche 4 bis 9, dadurch gekennzeichnet, daß der Abschlußschieber (4) breiter ist als der bzw. die Düsenschieber (3) bzw. die verschiebbare Eintrittsdüse.

## Claims

1. An apparatus, more particularly a mixing head for the mixing of two or more synthetic resin components capable of reacting with each other, each of said components entering a mixing chamber (11) through at least one inlet nozzle (14 and 15), and in the said chamber they impinge on each other and come out of the mixing chamber by way of an outlet port (37), the said mixing chamber being so designed that a controlling member in the form of a control spool (1) moving in the direction of its length in its one end position produces a connection between the inlet nozzles and the outlet port running through the mixing chamber, and in its other end position shuts off the inlet ports from the mixing chamber, characterized in that at least one (14, 44 and 45) of the inlet nozzles (14, 15, 44 and 45) may be moved into the mixing chamber (hole 11 and 41) and out of it, more specially in a direction normal to the axis of the mixing chamber.

2. The apparatus as claimed in claim 1 characterized in that the shifting inlet nozzle (14, 44 and 45) is placed stationarily in a shifting nozzle slide (3, 30 and 33).

3. The apparatus as claimed in claim 1 or claim 2 characterized in that the shifting inlet nozzle (14, 44 and 45) may be moved into the mixing chamber as far a desired position in order to reduce the size of the mixing chamber (hole 11 and 4) and may be pulled back out of this position.

4. The apparatus as claimed in any one of claims 1 to 3 comprising a dam body (4) adapted to be moved into the mixing chamber between the inlet nozzles and the outlet port, characterized in that the dam body, designed in the form of a terminating slide (4 and 34) in its inserted position is rested directly against the side, nearest the outlet port (37), of the shifting outlet nozzle or of one of the nozzle slides (3 and 30) and shuts off the inlet nozzles (14, 15, 44 and 45) from the outlet port, the nozzle slide and the terminating slide only taking up a small part of the cross section of the mixing chamber in their inserted position.

5. The apparatus as claimed in any one of the claims hereinbefore, characterized in that the nozzle slide (3, 30 and 33) furthermore contains the supply duct (12, 42 and 43) leading to the inlet nozzle (14, 44 and 45).

6. The apparatus as claimed in any one of claims 2 to 5 characterized in that the front end of the nozzle slide (3, 30 and 33) and/or of the terminal slide (4 and 34) is so constructed that in the non-mixing phase it is in line with the wall of the mixing chamber (hole 11 and 41).

7. The apparatus as claimed in claim 6 with a cylindrical mixing chamber, characterized in that the end side (16, 36 and 46) of the nozzle slide or slides (34, 30 and 33) is circular in form and with the inlet nozzles (14, 15 or 44 and 45) it forms a pre-micing chamber (5).

8. The apparatus as claimed in any one of claims 1 to 7, characterized in that the side, facing the outlet port (37) has a concave, inwardly turned semi-cylindrical recess (28) and in that the nozzle slide (3) moving parallel to the terminal slide, is so designed that it has a convex or semi-cylindrical projection matching the nozzle slide.

9. The apparatus as claimed in any one of claims 1 to 8 characterized in that the position of the control member (control piston 1 and 31) may be varied when the inlet nozzles (14 and 15) are opened (mixing condition).

10. The apparatus as claimed in any one of claims 4 to 9 characterized in that the terminal slide (4) is broader than the nozzle slides or slides (3) or the sliding the inlet nozzle.

## Revendications

1. Dispositif (tête de malaxage) pour mélanger deux ou plus de deux composants de matière plastique réagissant mutuellement, qui pénètrent par l'intermédiaire d'au moins une buse d'entrée respective (14, 15) dans une chambre de mélangeage (11), se recontrent mutuellement dans cette chambre et sortent de ladite chambre de mélangeage, sous la forme d'un mélange, en empruntant un orifice de sortie (37), ladite chambre de mélangeage étant configurée de façon qu'un organe de commande, réalisé sous la forme d'un piston de commande (1) mobile longitudinalement, dégage dans l'une de ses positions extrêmes la jonction entre les buses d'entrée et l'orifice de sortie de part en part de la chambre de mélangeage et que, dans son autre position extrême, il obture les orifices d'entrée par rapport à ladite chambre de mélangeage, dispositif caractérisé par le fait qu'au moins l'une (14, 44, 45) des buses d'entrée (14, 15, 44, 45) est mobile pour pénétrer dans la chambre de mélangeage (perçage 11, 41) et pour en sortir, de préférence perpendiculairement à l'axe de cette chambre de mélangeage.

2. Dispositif selon la revendication 1, caractérisé par le fait que la buse mobile d'entrée (14, 44, 45) occupe une position fixe dans un coulisseau mobile à buse (3, 30, 33).

3. Dispositif selon la revendication 1 ou 2, caractérisé par le fait que la buse mobile d'entrée (14, 44, 45) est réalisée de façon à pouvoir être introduite jusqu'à une position souhaitée dans la chambre de mélangeage et à pouvoir en être de nouveau extraite, dans le but de réduire le volume de cette chambre de mélangeage (perçage 11, 41).

4. Dispositif selon l'une des revendications 1 à 3, comportant un organe de retenue (4) pouvant être introduit dans la chambre de mélangeage entre les buses d'entrée et l'orifice de sortie, dispositif caractérisé par le fait que ledit organe de retenue réalisé sous la forme d'un coulisseau d'obturation (4, 34) est directement appliqué en position insérée, contre la face, tournée vers l'orifice de sortie (37), de la buse mobile de sortie ou de l'un des coulisseaux à buses (3, 30), respectivement, et obture la région des buses d'entrée (14, 15, 44, 45) en direction de l'orifice de sortie, le coulisseau à buse et le coulisseau obturateur n'occupant, en position insérée, qu'une partie de la section de la chambre de mélangeage.

5. Dispositif selon l'une des revendications précédentes, caractérisé par le fait que le coulisseau à buse (3, 30, 33) renferme également le conduit d'amenée (12, 42, 43) gagnant la buse d'entrée (14, 44, 45).

6. Dispositif selon l'une des revendications 2 à 5, caractérisé par le fait que l'extrémité antérieure du coulisseau à buse (3, 30, 33) et/ou du coulisseau d'obturation (4, 34) est réalisée de telle façon que, dans la phase de non-mélangeage, elle vienne à fleur de la paroi de la chambre de mélangeage (perçages 11, 41).

7. Dispositif selon la revendication 6, comportant une chambre cylindrique de mélangeage, caractérisé par le fait que la face extrême (16, 36, 46) du ou des coulisseaux à buses (3, 30, 33) est réalisée circulaire, et forme une chambre (5) de mélangeage préalable lorsque les buses d'entrée (14, 15; 44, 45) sont espacées d'une faible distance mutuelle.

8. Dispositif selon l'une des revendications 1 à 7, caractérisé par le fait que la face du coulisseau d'obturation (4) éloignée de l'orifice de sortie (37) présente un évidement (28) concave ou semi-cylindrique vers l'intérieur; et par le fait que le coulisseau à buse (3), mobile parallèlement au coulisseau d'obturation, est configuré de façon à comporter une saillie adaptée audit évidement, c'est-à-dire une saille convexe ou semi-cylindrique.

9. Dispositif selon l'une des revendications 1 à 8, caractérisé par le fait que la position de l'organe de commande (piston de commande 1, 31) peut être modifiée lorsque les buses d'entrée (14, 15) sont dégagées (position de mélangeage).

10. Dispositif selon l'une des revendications 4 à 9, caractérisé par le fait que le coulisseau d'obturation (4) est plus large que le ou les coulisseaux à buses (3) ou que la buse mobile d'entrée, respectivement.

Fig. 1

Fig. 2

Fig. 3

Fig. 4

Fig. 5